Europäisches Patentamt

European Patent Office

Office européen des brevets

(19)

(11) Publication number: **0 287 062 B1**

## (12) EUROPEAN PATENT SPECIFICATION

(45) Date of publication of patent specification: **04.09.91**

(51) Int. Cl.⁵: **B25J 19/00**

(21) Application number: **88105878.8**

(22) Date of filing: **13.04.88**

(54) **Joint mechanism of industrial robot.**

(30) Priority: **13.04.87 JP 90032/87**

(43) Date of publication of application:
**19.10.88 Bulletin 88/42**

(45) Publication of the grant of the patent:
**04.09.91 Bulletin 91/36**

(84) Designated Contracting States:
**DE GB**

(56) References cited:
**WO-A-85/01686**
**DE-A- 2 228 598**
**US-A- 4 518 308**
**US-A- 4 547 120**

(73) Proprietor: **MITSUBISHI DENKI KABUSHIKI KAISHA**
**2-3, Marunouchi 2-chome Chiyoda-ku**
**Tokyo 100(JP)**

(72) Inventor: **Iwata, MasanariŞMitsubishi Denki K.K.**
**Nagoy Works 1-14, Yadaminami 5-chome**
**Higashi-ku Nagoya-shi Aichi(JP)**

(74) Representative: **Füchsle, Klaus, Dipl.-Ing. et al**
**Hoffmann . Eitle & Partner Patentanwälte Arabellastrasse 4**
**W-8000 München 81(DE)**

## Description

This invention relates to a joint or articulation mechanism of industrial robots according to the preamble of claim 1.

Such a joint mechanism is known from US-A-4 547 120. However, in this mechanism, the drive shaft of the motor provided in the form of a cylinder/piston assembly is connected to the motor shaft connection portion in the region of the empty room to which the cable passes so that a simple arrangement of the driving mechanism is complicated and the generation of dust is not entirely avoidable.

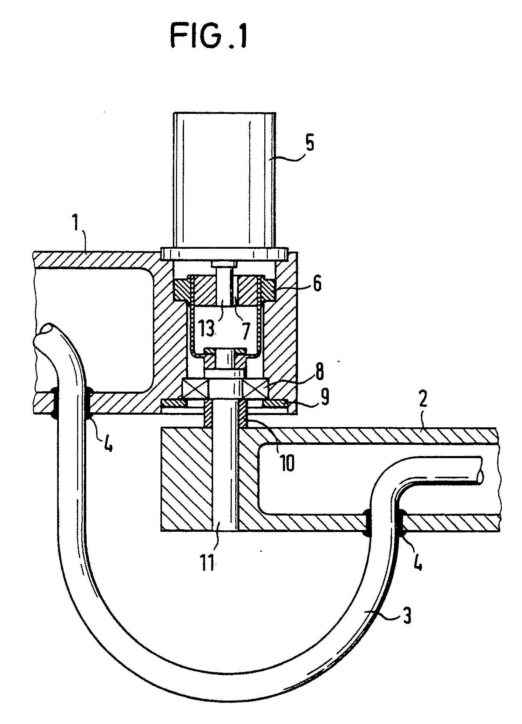

Fig. 1 shows the structure of a robot joint which had been known to our company prior to the completion of the present invention. In this drawing, the distal end of an upper arm ( a second arm ) (1) supports a joint shaft (11) by means of a motor (5), a harmonic drive (6) and a bearing (8). This joint shaft (11), in turn, supports a forearm ( a first arm ) (2) secured thereto. (3) designates a cable which supplies motive power, electric power used for various detection purposes, air, etc. to motors and/or hands ( not shown ) provided at the distal end of the forearm (2). (4) designates protective bushes for the cable (3), (7) a key formed on the drive shaft (13) of the motor (5), (9) a stopper plate, and (10) a spacer. Incidentally, the arrangement wherein the harmonic drive (6) is attached to the joint shaft of the robot is disclosed in US Patent No. 4,096,766, hence, no further description will be given here.

The operation of the foregoing mechanism will now be described. As the motor (5) rotates, the output end ( the lower end ) of the harmonic drive (6) rotates at a reduced speed, so that the joint shaft (11) directly connected to the output end and the forearm (2) begin to swivel.

Since the robot joint mechanism shown in Fig. 1 has the foregoing structure, the motive power transmission elements must be provided on the joint shaft (11), and the cable (3) for supplying power, air, etc. beyond the joint must be led out of the arms in the joint section.

On the other hand, an industrial robot of the type wherein a cable (3) is stored inside a joint section is also known as disclosed in Japanese Patent Application Laid-Open No. 62-48485. The joint mechanism of this industrial robot publicly known is improved so that the cable is stored inside the joint section, but is defective in that a joint driving motor is located apart from the joint axial line, and a motive power transmission mechanism including transmission gears, belts, etc. must be provided between the motor drive shaft and the joint drive section, in addition to a reduction gearing which is primarily necessary for joint driving (but, sometimes unnecessary depending on the type of motor used ). Therefore, this type is complicated in the structure of the motive power transmission mechanism, requires the adjustment of engagement between transmission gears, tension of belts, etc., and is not adapted for clear ( little-dust-generation ) robotization because the transmission gears, belts, etc. include a lot of sliding portions or dust generating portions.

It is an object of the present invention to provide a clean ( little-dust-generation ) joint mechanism of industrial robots whose cable for supplying power, air, etc. beyond a joint section is not necessary to be led out of arms in the joint section.

This object is solved in accordance with the present invention by a joint mechanism of an industrial robot which, according to claim 1, has a second arm or stationary base rotatably supporting via a bearing 8 a joint shaft 11 integrally attached to a first arm 2 in alignment with the center line of rotation 11F of said first arm 2, comprising: a motor 5 attached to said second arm 1 or stationary base and having a drive shaft 13, wherein said joint shaft 11 is made up of a motor shaft connection portion 11C mechanically connected directly or via an attaching member to said motor drive shaft 13 in alignment with the center line of rotation 11F of said first arm 2, a joint shaft portion 11A attached integrally to said first arm 2 and formed with an empty room 11G therein through which at least a cable 3 can pass, and a coupling portion 11E connecting said motor shaft connection portion 11C with said joint shaft portion 11A such that the opening of said empty room 11G suffers substantially no restriction, wherein the drive shaft 13 of said motor 5 is in alignment with the center line of rotation 11F of said first arm 2, said motor drive shaft 13 and said motor shaft connection portion 11C of said joint shaft 11 are connected directly or via an attaching member together in alignment with the aforementioned center line of rotation 11F, said attaching member for connecting together said motor drive shaft 13 and said motor shaft connection portion 11C of said joint shaft 11 is a harmonic drive 6, and the inner surface of said empty room 11G formed in said joint shaft portion 11A of said joint shaft 11 is provided with a protective bush 4 for cable protection.

Another feature of the present invention is that the joint shaft forming part of the joint mechanism is made up of the motor shaft connection portion, a joint portion including the empty room, and a crank-shaped coupling portion, whereby the cable is passed through the empty room.

## BRIEF DESCRIPTION OF THE DRAWINGS

Fig. 1 is a sectional view showing the structure of a robot joint known to our company;

Fig. 2 is a sectional view showing the structure of a joint according to an embodiment of the present invention; and

Fig. 3 is a perspective view of the joint shaft shown in Fig. 2.

## DETAILED DESCRIPTION OF THE PREFERRED EMBODIMENT

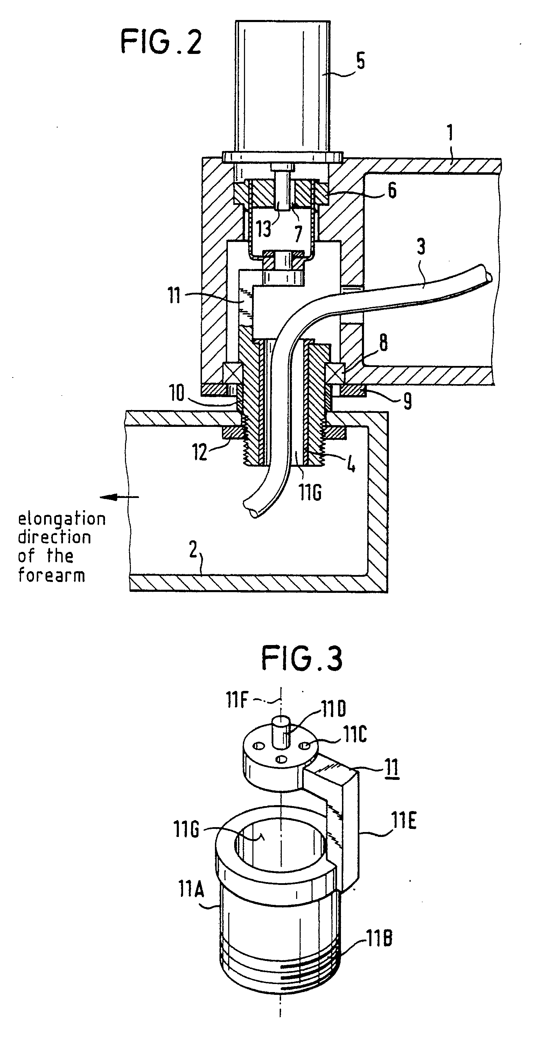

An embodiment of the present invention will now be described with reference to the drawings. Fig. 2 shows the structure of a robot joint of the present invention, in which reference numerals pointing at respective elements correspond to those shown in Fig. 1. (12) designates a nut for securing the first arm or forearm (2) to the joint shaft (11). The significant different point of the present invention from the structure shown in Fig. 1 is the configuration of the joint shaft (11), that is, it has a crank shape and its one half is made in the form of a cylinder.

In Figs. 2 and 3, (11A) designates a cylinder portion serving as a joint shaft portion which is secured to the first arm or forearm (2) by means of the nut (12) and rotatably connected via the bearing (8) to the second arm or upper arm (1) serving as a stationary base, and which has an empty room (11G) formed in the inside thereof. (11B) designates a threaded portion on which the nut (12) is fitted, and (11C)(11C) designate tapped holes for bolts and a shaft portion, respectively, these being used for connection with the harmonic drive (6), thus serving as a motor shaft attaching portion. The shaft portion (11C) is formed so that its center axial line (11F) is in line with that (11F) of the cylinder portion (11A). (11E) designates a crank-shaped coupling portion for connecting the cylinder portion (11A) with the shaft portion (11D).

As shown clearly in Fig. 2, the joint shaft (11) of the foregoing configuration is assembled in such a manner that in the inside of the upper arm (1) the shaft portion (11D) is connected by means of bolts ( not shown ) fitable in the tapped holes (11C) to the harmonic drive (6) connected to the motor (5), an upper portion of the cylinder portion (11A) is rotatably connected via the bearing (8) to the upper arm (1), and a lower portion of the cylinder portion (11A) is tightened and secured to the forearm (2) by means of the nut (12) fitable on the threaded portion (11B) of the cylinder portion (11A).

The protective bush (4) is inserted in the cylinder portion (11A), and the cable (3) is passed through the bush (4) for supplying motive power, electric power used for various detection purposes, air, etc. to motor and/or hands provided at the distal end of the forearm (2); therefore, the cable (3) is incorporated in the joint section without being exposed outside the upper arm (1) and the forearm (2). In the foregoing arrangement, since the coupling portion (11E) of the joint shaft (11) is offset in the elongating direction of the forearm (2) and disposed on the left-hand side in Fig. 2, thereby providing a relief space for the cable (3) by virtue of the crank portion, the cable (3) can never be damaged even when the forearm (2) swivels. Because of the foregoing structure the cable (3) is not exposed outside, so that the external beauty of the robot is further enhanced and less danger of damage is imposed on the cable (3).

Although in the embodiment the motor (5) is connected via the harmonic drive (6) to the joint shaft, the joint shaft may be directly connected to the output shaft (13) of the motor (5). Although the bearing (8) is shown as being of one row type, using two or more row type will be understood to be better from the viewpoint of strength.

Further, although in the embodiment the joint shaft (11) according to the present invention is described as being used in the joint section between the upper arm (1) and the forearm (2), the intended object of the present invention can of course be attained even when the present joint shaft (11) is employed in the joint section between a stationary base and an arm.

As described above with reference to the embodiment, the present invention makes the joint shaft in the form of a crank and its one half in the form of a cylinder as shown in Fig. 3; consequently, the cable can be wired through a central portion of the cylinder portion of the joint shaft ( without being led out of the arms ), so that the external beauty of the robot is further enhanced and the possibility of the cable being damaged becomes very little.

Further, the output shaft of the motor is positioned in alignment with the center line of rotation of the first arm, the motor is mounted on the second arm or stationary base, and the output shaft of the motor is connected directly or via an attaching member such as the harmonic drive to the joint shaft; consequently, sliding portion in the motive power transmission section are remarkably reduced, thereby lessening the generation of dust, whereby there can be provided the clean joint mechanism of industrial robots.

## Claims

1. A joint mechanism of an industrial robot having a second arm (1) or stationary base rotatably supporting via a bearing (8) a joint shaft (11) integrally attached to a first arm (2) in alignment with the center line of rotation (11F) of said first arm (2), comprising:

    a motor (5) attached to said second arm

(1) or stationary base and having a drive shaft (13),

wherein said joint shaft (11) is made up of a motor shaft connection portion (11C) mechanically connected directly or via an attaching member to said motor drive shaft (13) in alignment with the center line of rotation (11F) of said first arm (2),

a joint shaft portion (11A) attached integrally to said first arm (2) and formed with an empty room (11G) therein through which at least a cable (3) can pass, and

a coupling portion (11E) connecting said motor shaft connection portion (11C) with said joint shaft portion (11A) such that the opening of said empty room (11G) suffers substantially no restriction,

characterized in that

the drive shaft (13) of said motor (5) is in alignment with the center line of rotation (11F) of said first arm (2),

said motor drive shaft (13) and said motor shaft connection portion (11C) of said joint shaft (11) are connected directly or via an attaching member together in alignment with the aforementioned center line of rotation (11F),

said attaching member for connecting together said motor drive shaft (13) and said motor shaft connection portion (11C) of said joint shaft (11) is a harmonic drive (6), and

the inner surface of said empty room (11G) formed in said joint shaft portion (11A) of said joint shaft (11) is provided with a protective bush (4) for cable protection.

2. A joint mechanism of an industrial robot according to claim 1, wherein said coupling portion (11E) of said joint shaft (11) is in the form of a crank.

3. A joint mechanism of an industrial robot according to claim 1, wherein said coupling portion (11E) of said joint shaft (11) is offset in the elongating direction of said first arm (2).

**Revendications**

1. Mécanisme de joint d'un robot industriel comportant un second bras (1) ou base fixe supportant en rotation via un roulement (8) un arbre (11) de joint fixé en une pièce à un premier bras (2) en alignement avec l'axe de rotation (11F) dudit premier bras (2), comprenant :

- un moteur (5) fixé audit second bras (1) ou base fixe et comportant un arbre d'entraînement (13),

dans lequel ledit arbre (11) du joint est constitué d'une partie (11C) de connexion d'arbre de moteur, connectée mécaniquement directement ou via un élément de fixation audit arbre (13) d'entraînement du moteur en alignement avec l'axe de rotation (11F) dudit premier bras (2),

- une partie (11A) de bras de joint fixée intégralement audit premier bras (2) et comportant une enceinte vide (11G) que peut traverser au moins un câble (3) et

- une partie d'accouplement (11E) reliant ladite partie (11C) de connexion d'arbre de moteur à ladite partie (11A) de bras de joint de façon que l'ouverture de ladite enceinte vide (11G) ne souffre d'aucune restriction,

caractérisé en ce que :

- l'arbre d'entraînement (13) dudit moteur (5) est en alignement avec l'axe de rotation (11F) dudit premier bras (2),

- ledit arbre d'entraînement (13) du moteur et ladite partie (11C) de connexion d'arbre de moteur dudit arbre (11) du joint sont reliés ensemble directement ou via un élément de fixation en alignement avec l'axe de rotation (11F) mentionné ci-dessus,

- ledit élément de fixation pour connecter ensemble ledit arbre (13) d'entraînement du moteur et ladite partie (11C) dudit arbre (11) du joint, de connexion d'arbre de moteur, est une commande harmonique (6), et

- la surface intérieure de ladite enceinte vide (11G) formée dans ladite partie (11A) dudit arbre (11) du joint comporte une bague protectrice (4) pour la protection du câble.

2. Mécanisme de joint d'un robot industriel selon la revendication 1, dans lequel ladite partie d'accouplement (11E) dudit arbre (11) du joint se présente sous la forme d'une manivelle.

3. Mécanisme de joint pour robot industriel selon la revendication 1, dans lequel ladite partie d'accouplement (11E) dudit arbre (11) du joint est décalée dans la direction d'allongement dudit premier bras (2).

**Patentansprüche**

1. Gelenkmechanismus eines Industrieroboters mit einem zweiten Arm (1) oder einer stationären Basis, der über ein Lager (8) drehbar einen Verbindungsschaft (11) trägt, der einstückig an einem ersten Arm (2) fluchtend mit der Rotationsachse (11F) des ersten Armes (2) befestigt ist, umfassend:

einen Motor (5), der an dem zweiten Arm (1) oder der stationären Basis befestigt ist und eine Antriebswelle (13) aufweist,

wobei der Verbindungsschaft (11) aus einem Motorschaftverbindungsabschnitt (11C) besteht, der mit der Motorantriebswelle (13) mechanisch direkt oder über ein Befestigungsglied fluchtend mit der Rotationsachse (11F) des ersten Armes (2) verbunden ist,

einen Verbindungsschaftabschnitt (11A), der einstückig an dem ersten Arm (2) befestigt ist und in dem ein Hohlraum (11G) ausgebildet ist, durch den mindestens ein Kabel (3) gelangen kann, und

ein Verbindungsabschnitt (11E), der den Motorschaftverbindungsabschnitt (11C) mit dem Verbindungsschaftabschnitt (11A) derart verbindet, daß die Öffnung des Hohlraumes (11G) keiner wesentlichen Beschränkung unterliegt,

dadurch **gekennzeichnet,** daß

die Antriebswelle (13) des Motors (5) mit der Rotationsachse (11F) des ersten Armes (2) fluchtet,

die Motorantriebswelle (13) und der Motorschaftverbindungsabschnitt (11C) des Verbindungsschaftes (11) miteinander direkt oder über ein Befestigungsglied mit der obigen Rotationsachse (11F) fluchtend verbunden sind,

das Befestigungsglied zum Miteinanderverbinden der Motorantriebswelle (13) und des Motorschaftverbindungsabschnitts (11C) des Verbindungsschaftes (11) ein harmonischer Antrieb (6) ist, und

die Innenfläche des in dem Verbindungsschaftabschnitt (11A) des Verbindungsschaftes (11) ausgebildeten Hohlraums (11G) mit einer Schutzbuchse (4) zum Schutz des Kabels versehen ist.

2. Gelenkmechanismus eines Industrieroboters nach Anspruch 1, worin der Verbindungsabschnitt (11E) des Verbindungsschaftes (11) in Form eines Winkelhebels ausgebildet ist.

3. Gelenkmechanismus eines Industrieroboters nach Anspruch 1, worin der Verbindungsabschnitt (11E) des Verbindungsschaftes (11) in Längsrichtung des ersten Armes (2) versetzt ist.

# FIG.1

# FIG.2

5

1

6

13  7

11

3

8

10

9

12

4

11G

2

elongation
direction
of the
forearm

# FIG.3

11F

11D

11C

11

11G

11E

11A

11B